**Europäisches Patentamt**

**European Patent Office**

**Office européen des brevets**

(19)

(11) Veröffentlichungsnummer : **0 156 820**
**B1**

(12) **EUROPÄISCHE PATENTSCHRIFT**

(45) Veröffentlichungstag der Patentschrift :
20.01.88

(21) Anmeldenummer : 84903166.1

(22) Anmeldetag : 20.08.84

(86) Internationale Anmeldenummer :
PCT/DE 84/00170

(87) Internationale Veröffentlichungsnummer :
WO/8501256 (28.03.85 Gazette 85/08)

(51) Int. Cl.⁴ : **B 60 K 41/04**, B 60 Q 9/00

(54) **VERFAHREN UND SCHALTUNGSVORRICHTUNG ZUR ERMITTLUNG DES VERBRAUCHSOPTIMALEN GETRIEBE-GANGES EINES KRAFTFAHRZEUGANTRIEBES.**

(30) Priorität : 21.09.83 DE 3334093

(43) Veröffentlichungstag der Anmeldung :
09.10.85 Patentblatt 85/41

(45) Bekanntmachung des Hinweises auf die Patenterteilung : 20.01.88 Patentblatt 88/03

(84) Benannte Vertragsstaaten :
DE FR SE

(56) Entgegenhaltungen :
DE-A- 2 658 464
DE-A- 3 128 080
GB-A- 2 030 661
GB-A- 2 084 524
US-A- 4 208 925

(73) Patentinhaber : ROBERT BOSCH GMBH
Robert-Bosch-Platz 1
D-7016 Gerlingen-Schillerhöhe (DE)

(72) Erfinder : RAUCH, Hans
Distelweg 11
D-8510 Fürth (DE)
Erfinder : WESEMEYER, Jürgen
Rohrmattenstrasse 26
D-8500 Nürnberg 30 (DE)

EP 0 156 820 B1

## Beschreibung

### Stand der Technik

Die Erfindung geht aus von einem Verfahren zur Ermittlung des verbrauchsoptimalen Getriebeganges eines Kraftfahrzeugantriebes nach der Gattung des Anspruchs 1. Ferner betrifft die Erfindung eine Schaltungsvorrichtung zur Durchführung des Verfahrens. Bei einer bekannten Schaltungsanordnung zur Steuerung einer Gangschaltanzeige eines Kraftfahrzeugantriebes werden für jeden Getriebegang vom Fahrzeughersteller ermittelte Grenzwerte für das Einlegen des nächsthöhren Getriebeganges in einem elektronischen Festwertspeicher gegeben. Während der Fahrt werden die laufend ermittelten Drehzahlwerte und Gaspedalstellungen in einem Rechner mit den Grenzwerten verglichen und beim Überschreiten der Grenzwerte wird ein Signal zum Hochschalten des Getriebes ausgelöst (DE-OS 31 28 080). Diese Lösung hat den Nachteil, daß für jeden Fahrzeugtyp je nach Getriebestufung und Motorleistung die Grenzwerte vom Kraftfahrzeughersteller ermittelt werden müssen, wobei von einer optimalen Einstellung der Brennkraftmaschine ausgegangen wird. Da jedoch die Motoren nach dem sogenannten Einfahren bereits größere Leistungsschwankungen aufweisen können und da ferner im Lauf der Zeit durch eine Verstellung der Zündung oder des Vergasers bzw. der Einspritzpumpe weitere Leistungsschwankungen hinzukommen, können die vom Hersteller ermittelten Grenzwerte für eine Getriebeumschaltung nur Näherungswerte darstellen. Außerdem werden bei diesem Verfahren unterschiedliche Beladungszustände und Fahrbahnsteigungen während der Fahrt bei der Hochschaltanzeige nicht berücksichtigt.

Mit der vorliegenden Erfindung wird angestrebt, ein Verfahren zur Ermittlung der Grenzwerte für eine Getriebeumschaltung zu entwickeln, welches unabhängig von der Motorstärke, der Fahrzeugbelastung und der Getriebeabstufung eine optimale Leistungsabgabe bei minimalem Kraftstoffverbrauch ermöglicht.

### Vorteile der Erfindung

Das erfindungsgemäße Verfahren zur Ermittlung des verbrauchsoptimalen Getriebeganges nach den kennzeichnenden Merkmalen des Anspruchs 1 hat den Vorteil, daß die für eine Getriebeumschaltung benötigten Grenzwerte von Gaspedalstellung und Motordrehzahl erst nach dem Einbau der Schaltung im Kraftfahrzeug während einer ersten Fahrstrecke ermittelt werden. Ein solches System ist folglich generell in sämtliche Fahrzeugtypen ohne Anpassungsmaßnahmen oder Änderungen einsetzbar. Es ermittelt die fahrzeugspezifischen und somit entsprechend genauen Grenzwerte für eine verbrauchsoptimale Getriebeumschaltung, wobei nach dem Umschaltvorgang zumindest noch die gleiche Leistung vom Antriebsmotor zur Verfügung gestellt werden kann. Ein weiterer Vorteil besteht darin, daß nach dem erfindungsgemäßen Verfahren und der dafür benötigten Schaltung auch das Fahrverhalten des Fahrers zur Ermittlung der Grenzwerte mitberücksichtigt wird. Durch die Messung einer sogenannten normierten Leistung vor und nach dem Umschalten des Getriebes werden bei einem geschickten Fahrer, der nur kurze Schaltzeiten benötigt, andere Grenzwerte ermittelt und abgespeichert als bei einem Fahrer, der eine längere Zeit zum Einlegen des neuen Ganges braucht.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist, wenn für jeden Getriebegang in dem ihm zugeordneten Bereich eines Grenzwertspeichers die ermittelten Grenzwerte in einer nach Motordrehzahl und Gaspedalstellung in Stufen aufgegliederten Speichermatrix abgelegt werden. Nach Ermittlung und Speicherung der Grenzwerte wird zur Ausgestaltung der Erfindung vorgeschlagen, jeweils die augenblicklichen Werte für die Motordrehzahl und die Gaspedalstellung mit den im Grenzwertspeicher gespeicherten Grenzwerten, des eingelegten Getriebeganges zu vergleichen um dann ein Hochschaltsignal auszulösen, wenn die augenblicklichen Werte die Grenzwerte zum verbrauchsungünstigen Betriebsbereich hin überschreiten.

Die Schaltungsvorrichtung zur Durchführung des Verfahrens mit den kennzeichnenden Merkmalen der Anspruchs 8 hat den Vorteil, daß für die Schaltung gegebenenfalls bereits vorhandene Geber zur Messung der Drehzahlen und der Gaspedalstellung mit verwendet werden können und daß praktisch jedes Fahrzeug mit einer solchen Schaltung nachgerüstet werden kann. In vorteilhafter Weise ist dabei die Auswerteschaltung durch einen Mikrocomputer realisiert, an dessen Ausgang eine Hochschaltanzeige angeschlossen ist.

### Zeichnung

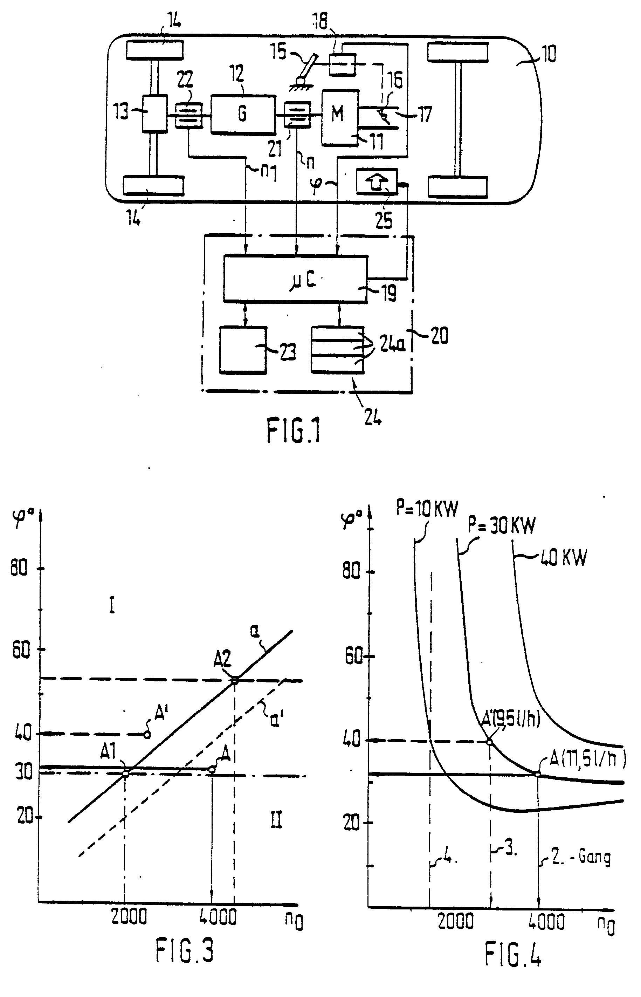

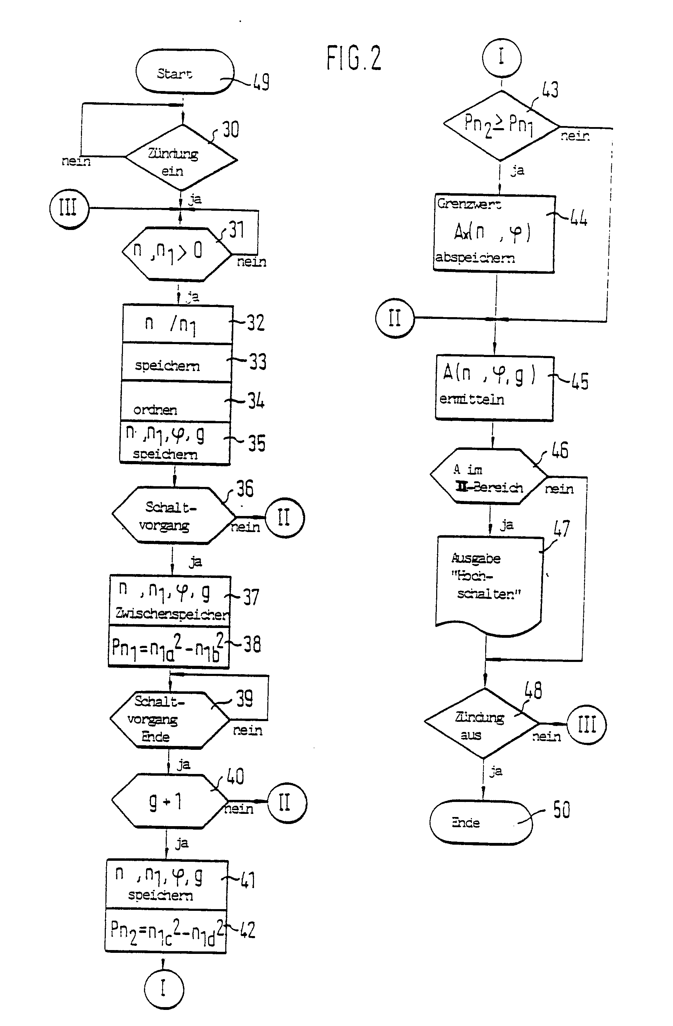

Ein Ausführungsbeispiel der Erfindung ist in der Zeichnung dargestellt und in der nachfolgenden Beschreibung näher erläutert. Es zeigen Figur 1 ein Kraftfahrzeug in symbolischer Darstellung mit einem Blockschaltbild der Schaltung zur Durchführung der erfindungsgemäßen Verfahrens, Figur 2 zeigt ein Flußdiagramm für einen Rechner in der Schaltung nach Figur 1 zur Ermittlung der Grenzwerte sowie zur Auslösung einer Hochschaltanzeige, Figur 3 zeigt eine Grenzwertkennlinie des Grenzwertspeichers aus Figur 1 für einen Getriebegang und Figur 4 zeigt Leistungskennlinien für den Antriebsmotor des Kraftfahrzeuges.

### Beschreibung des Ausführungsbeispieles

In Figur 1 ist ein beliebiges symbolisch dargestelltes Kraftfahrzeug mit 10 bezeichnet, in dem eine Brennkraftmaschine als Antriebsmotor 11 installiert ist. Der Antriebsmotor 11 ist über ein auskuppelbares, umschaltbares Stufengetriebe 12 und ein Differential 13 mit zwei Antriebsrädern 14 des Kraftfahrzeuges gekoppelt. Ein vom Fahren mit dem Fuß zu betätigendes Gaspedal 15 ist über eine gestrichelt dargestellte, mechanische Wirkverbindung mit einer Drosselklappe 16 im Ansaugrohr 17 des Antriebmotors 10 verbunden. Das Gaspedal 15 wirkt außerdem in bekannter Weise auf eine nicht dargestellte Kraftstoffzufuhr, z. B. Vergaser oder Einspritzpumpe des Antriebsmotors 10. Ein die Stellung des Gaspedals 15 bzw. der Drosselklappe 16 abfühlender Weggeber 18 ist mit dem Eingang eines Mikrocomputers 19 einer Auswerteschalteinrichtung 20 elektrisch verbunden. Ein die Drehzahl n des Antriebsmotors 11 abfühlender Geber 21 zwischen Motor 11 und Getriebe 12 ist ebenfalls an einem Eingang des Mikrocomputers 19 angeschlossen. Über einen dritten Geber 22 am Ausgang des Getriebes 12 wird die Abtriebsdrehzahl $n_1$ des Getriebes 12 abgefühlt und ebenfalls auf einen Eingang des Mikrocomputers 19 geschaltet. Der Drehzahlwert $n_1$ ist gleichzeitig ein Wert für die Antriebsdrehzahl oder Fahrgeschwindigkeit des Fahrzeugs 10. Außerdem ist am Mikrocomputer 19 ein Transientenspeicher 23 als Kurzzeitspeicher sowie ein Grenzwertspeicher 24 angeschlossen, der wiederum für jeden Getriebegang in einzelne, aus je einer Speichermatrix 24a bestehende Bereiche unterteilt ist. Für den Rückwärtsgang sowie für den höchsten Getriebegang ist jedoch im Grenzwertspeicher kein Bereich vorgesehen. Am Ausgang des Mikrocomputers 19 ist eine Hochschaltanzeige 25 angeschlossen, die ein optisches Signal abgibt, wenn der Antriebsmotor 11 in einem höheren Gang des Stufengetriebes wirtschaftlicher zu arbeiten vermag.

Das Verfahren zur Ermittlung des verbrauch-soptimalen Getriebeganges sowie die Wirkungs-weise der dafür vorgesehenen Schaltung nach Figur 1 soll nunmehr mit Hilfe des Flußdiagrammes aus der Figur 2 und der Kennlinien nach Figur 3 und 4 näher erläutert werden. Bei Inbetriebnahme des Fahrzeuges 10 wird dabei zunächst die Getriebestufung ermittelt und danach werden für jeden Getriebegang — mit Ausnahme des höchsten Ganges — die Grenzwerte ermittelt und gespeichert. Schließlich werden während der Fahrt laufend Daten mit den Grenzwerten ver-glichen und gegebenenfalls eine Hochschaltan-zeige ausgelöst.

Bei Inbetriebnahme des Kraftfahrzeuges wird nach dem Start 49 des Computerprogramms zunächst im Schritt 30 geprüft, ob der Fahrschalter für die Maschine eingeschaltet ist. Über eine Schleife bleibt das Programm solange auf diesem Programmschritt stehen, bis die zum Fahren er-forderlichen Stromkreise schließlich eingeschal-tet sind. Im nächsten Schritt 31 wird nun die Motordrehzahl n und die Abtriebsdrehzahl $n_1$ des

Getriebes 12 abgefühlt. Sind beide Werte größer als 0, so läuft der Motor und das Fahrzeug fährt. Im nächsten Schritt 32 werden die Drehzahlwerte n und $n_1$ zueinander ins Verhältnis gesetzt und damit das Übersetzungsverhältnis des eingelegten Getriebeganges ermittelt. Im Schritt 33 wird der über eine kurze Zeit wiederholt ermittelte Wert in ein Register eingeschrieben und ein Registerzeiger wird um 1 erhöht. Die Zahl der besetzten Registerplätze entspricht dabei der Zahl der Gänge des Getriebes 12. In einem weiteren Schritt 34 werden nun gegebenenfalls die Registerinhalte der Größe nach geordnet, so daß die einzelnen Gänge g in aufsteigender Folge den Registern zugeordnet sind. Bei laufendem Motor 11 werden nun im Schritt 35 die gemessenen Drehzahlwerte n, $n_1$ sowie der Wert $\varphi$ für die Gaspedalstellung und der eingelegte Gang g in den Kurzzeitspeicher 23 für beispielsweise 10 Sekunden gespeichert. Im nächsten Schritt 36 wird durch Vergleich der Drehzahlwerte n und $n_1$ geprüft, ob am Getriebe 12 ein Schaltvorgang durchgeführt wird. Dies ist dann der Fall, wenn beide Drehzahlwerte nicht mehr in einem festen Verhältnis zueinander stehen. Im nächsten Schritt 37 werden dann die im Kurzzeitspeicher 23 zuletzt abgelegten Werte abgerufen und in einen Zwischenspeicher des Mikrocomputers 19 gegeben. Im nächsten Schritt 38 wird nun aus dem zeitlichen Verlauf der Abtriebsdrehzahl $n_1$ ein hier als normierte Leistung Pn bezeichneter Wert ermittelt, indem die Differenz der quadrierten Werte der kurzzeitig hintereinander gemesse-nen Drehzahlen $n_1$ am Getriebeausgang gebildet wird. Die normierte Leistung vor dem Umschaltvorgang wird im Mikroprozessor 19 nach folgen-dem Algorithmus ermittelt :

$$Pn_1 = n_{1a}^2 - n_{1b}^2$$

Der Wert $n_{1a}$ ist dabei der vor derm Umschalten zuletzt gemessene Drehzahlwert und der Wert $n_{1b}$ ist der beispielsweise 2 Sekunden früher gemessene Drehzahlwert. Beide Werte werden aus dem Kurzzeitspeicher 23 entnommen. Im Schritt 39 wird nun durch Vergleich der Drehzahl-werte n und $n_1$ geprüft, ob der Hochschaltvor-gang am Getriebe beendet ist. Sobald das der Fall ist, wird im folgenden Schritt 40 geprüft, ob das Getriebe 12 in den nächst höheren Gang (g + 1) geschaltet wurde. Ist dies der Fall, so werden im Schritt 41 weitere Drehzahlwerte n, $n_1$ sowie die Gaspedalstellung $\varphi$ und der eingelegte Gang im Kurzzeitspeicher 23 abgelegt. Nach drei Sekunden wird im Schritt 42 die neue normierte Lei-stung $Pn_2$ ermittelt, die nach dem Hochschalten des Getriebes auftritt. Für diese Berechnung wer-den der zuletzt gemessene Drehzahlwert $n_{1c}$ sowie der zwei Sekunden zuvor gemessene Dreh-zahlwert $n_{1d}$ aus dem Kurzzeitspeicher 23 verwendet und die normierte Leistung ergibt sich aus :

$$Pn_2 = n_{1c}^2 - n_{1d}^2$$

Im nächsten Schritt 43 wird jetzt geprüft, ob die nach dem Hochschalten des Getriebes 12 gemessene normierte Leistung $Pn_2$ gleich oder größer der normierten Leistung $Pn_1$ vor dem Hochschaltvorgang ist. Wenn dies der Fall ist, so wurde die tatsächliche Antriebsleistung des Fahrzeuges durch den Hochschaltvorgang nicht verringert, der Hochschaltvorgang ist also erfolgreich verlaufen.

Durch die sogenannte normierte Leistung Pn wird der Einfluß verschiedener Leistungsparameter wie Fahrzeuggewicht, Fahrbahnsteigungen, Luft- und Reibungswiderstände, Reifendruck usw., Streuung der Motorleistung, geübter oder ungeschickter Fahrer, Kraftstoffe mit unterschiedlicher Qualität usw. eliminiert. Es wird lediglich angenommen, daß diese Parameter vor und nach dem Hochschaltvorgang gleich groß sind. Ist nun nach dem Hochschalten die normierte Leistung gleich oder größer als vor dem Umschaltvorgang, so wurde mit dem Hochschalten der Kraftstoffverbrauch des Fahrzeuges pro Zeiteinheit bei gleicher Leistung und folglich bei gleicher Fahrgeschwindigkeit herabgesetzt. Es muß nun dafür gesorgt werden, daß bei zukünftigen Schaltvorgängen immer dann eine Hochschaltanzeige ausgelöst wird, wenn der Motor 11 in dem gleichen Gang g während der Fahrt wieder den zuletzt vor dem Hochschalten eingenommenen Arbeitspunkt erreicht. Figur 3 zeigt beispielsweise einen solchen Arbeitspunkt A1 für ein Hochschalten aus dem zweiten Gang des Getriebes 12, der aus dem Wert der gemessenen Motordrehzahl n vom $2\,000\ min^{-1}$ und dem Wert der gemessenen Gaspedalstellung $\varphi$ in Winkelgeraden von 30° ermittelt wird. Der Arbeitspunkt A1 bildet einen zumindest verläufigen Grenzwert für das Hochschalten des Getriebes. Dieser Grenzwert muß folglich im nächsten Programmschritt 44 in die Speichermatrix 24a des Grenzwertspeichers 24 für den zweiten Gang eingegeben werden. Die binäre Speichermatrix 24a des Grenzspeichers 24 ist in einzelne Speicherplätze zeilenweise nach Winkelbereichen der Gaspedalstellung $\varphi$ und spaltenweise nach Drehzahlbereichen der Motordrehzahl n feinstufig aufgegliedert. Der Arbeitspunkt A1 aus Figur 3 wird nun in den Bereich des Grenzwertspeichers 24 für den zweiten Gang in der Weise eingegeben, daß in sämtliche Speicherplätze oberhalb der Drehzahl n von $2\,000\ min^{-1}$ und unterhalb des Gaspedalstellung $\varphi$ von 30° eine 1 eingeschrieben wird. Alle übrigen Speicherplätze behalten als ursprünglichen Inhalt eine 0.

Bei einem späteren Hochschalten ohne Leistungsverlust aus dem zweiten Gang wird in gleicher Weise gemäß Figur 3 ein zweiter Arbeitspunkt A2 als Grenzwert ermittelt und in den Bereich des Grenzwertspeichers 24 für den zweiten Gang eingeschrieben, indem nunmehr alle Speicherplätze oberhalb einer Drehzahl n von 4 600 und unterhalb einer Gaspedalstellung $\varphi$ von 54° den Inhalt 1 erhalten. Auf diese Weise werden in den ersten 10 bis 100 km Fahrstrecke in den Speichermatrixen 24a des Grenzwertspeichers 24 ausreichend viele Grenzwerte eingeschrieben, so daß in jede Speichermatrix 24a des Grenzwertspeichers 24 ein Betriebsbereich I von Speicherplätzen mit dem Inhalt 0 für einen verbrauchsgünstigen Betriebszustand der Maschine und einen Betriebsbereich II aus Speicherplätzen mit dem Inhalt I für einen verbrauchsungünstigen Betriebszustand der Maschine gebildet wird. In Figur 3 sind beide Betriebsbereiche I und II durch eine Grenzwertkennlinie a voneinander getrennt dargestellt.

In einem weiteren Programmabschnitt nach Figur 2 wird nun bei eingelegtem Gang laufend geprüft, ob der Kraftstoffverbrauch durch Hochschalten des Getriebes bei der augenblicklichen Antriebsleistung verringert werden kann. Zu diesem Zweck wird im Programmschritt 45 zunächst aus dem eingelegten Gang g und aus den Werten der Drehzahl n und der Gaspedalstellung $\varphi$ der augenblickliche Arbeitspunkt A des Motors 11 ermittelt. Im nachfolgenden Schritt 46 wird geprüft, ob der ermittelte Arbeitspunkt A in dem verbrauchsungünstigen Bereich II der entsprechenden Speichermatrix 24a des Grenzwertspeichers 24 fällt, in dem die Speicherplätze den Inhalt 1 haben. Sobald dies der Fall ist, wird im Schritt 47 nach etwa drei Sekunden Wartezeit ein Signal vom Mikrocomputer 19 auf die Hochschaltanzeige 25 (Figur 1) abgegen und damit der Fahrer zum Hochschalten des Getriebes aufgefordert. In nächsten Programmschritt 48 wird geprüft, ob der Fahrschalter ausgeschaltet und der Motor folglich abgestellt ist. Sobald dies am Ende der Fahrt zutrifft, ist das Programmende 50 erreicht.

Solange der Fahrschalter jedoch noch eingeschaltet ist, springt nach dem Programmschritt 48 das Programm gemäß III-III in Figur 2 wieder bis zum Programmschritt 31 zurück um dann erneut in der zuvor beschriebenen Weise den eingelegten Getriebegang zu ermitteln und um neue Werte für die Drehzahlnen n, $n_1$, für die Gaspedalstellung $\varphi$ und für den Getriebegang g im Kurzzeitspeicher 23 ablegen. Solange das Getriebe 12 nicht geschaltet wird, springt das Programm nach dem Schritt 36 gemäß II-II auf den Schritt 45 und ermittelt in der zuvor beschriebenen Weise wieder den augenblicklichen Arbeitspunkt A der Maschine. Erst wenn das Getriebe geschaltet wird, läuft das Programm wieder nach dem Schritt 36 weiter auf die Schritte 37 und 38 zur Ermittlung der normierten Leistung Pn. Sobald das Getriebe 12 heruntergeschaltet wird oder im gleichen Gang wieder eingekuppelt wird, ist ein Vergleich der normierten Leistung vor und nach dem Umschaltvorgang nicht erforderlich. Das Programm springt daher nach dem Schritt 40 gemäß II-II wieder auf den Schritt 45 zur Ermittlung und Prüfung des augenblicklichen Betriebszustandes des Motors 11. Auch nach dem Programmschritt 43 springt das Programm immer dann auf den Schritt 45, wenn der Vergleich der normierten Leistung Pn vor und nach dem Hochschalten des Getriebes ergibt, daß die zuletzt gemessene normierte Leistung Pn geringer ist als die vor dem Hochschalten des Getriebes 12 ermittelte normierte Leistung (Pn) n. In diesen Fällen wird folglich der zuvor ermittelte Arbeitspunkt nicht in den Grenzwertspeicher 24 gegeben, denn die vor dem Hochschalten für den Fahrbetrieb benötigte Antriebsleistung wurde nach dem Hochschalten nicht mehr erreicht. Bei der laufenden Überprüfung des Arbeitspunktes A des Motors 11 überspringt das Programm immer dann den Schritt 47 zur Ausgabe eines Hochschaltsignales, wenn festgestellt wird, daß der ermittelte Arbeitspunkt A in dem verbrauchsgünstigen Bereich I des Grenzwertspeichers 24 liegt, dessen Speicherplätze mit einer 0 belegt sind.

Im Ausführungsbeispiel nach Figur 3 wurde im zweiten Gang der Arbeitspunkt A mit einer Motordrehzahl n = 4 000 min⁻¹ und einerGaspedalstellung φ = 32° ermittelt. Der diesem Arbeitspunkt A zugeordnete Speicherplatz in der Speichermatrix 24a des Grenzwertspeichers 24 für den zweiten Gang liegt unterhalb der Grenzlinie a. Der dem Arbeitspunkt A zugeordnete Speicherplatz des Grenzwertregisters 24 für den zweiten Gang hat daher den Inhalt 1. Das bedeutet, daß gemäß Programmschritt 47 ein Hochschaltsignal auf die Hochschaltanzeige 25 gegeben wird. Aus dem Kennlinienfeld nach Figur 4 ergibt sich, daß bei diesem Arbeitspunkt A der Motor 11 eine Leistung von P = 30 KW abgibt und einen Kraftstoffverbrauch von 11,5 Liter pro Stunde hat. Sobald nun der Fahrer der Aufforderung zum Hochschalten nachkommt, wird gemäß Figur 4 die Drehzahl n des Motors 11 im dritten Gang auf etwa 2 900 min⁻¹ abfallen und das Gaspedal wird zur Erzielung der gleichen Leistung bis auf φ = 40° weiter durchgetreten. Der Kraftstoffverbrauch im neuen Arbeitspunkt A' fällt dadurch auf 9,5 l pro Stunde zurück. Unter der Annahme, daß die Grenzwertlinien a für die verschiedenen Gänge etwa den gleichen Verlauf haben, kann aus Figur 3 abgeleitet werden, daß der neue Arbeitspunkt A' nunmehr im verbrauchsgünstigen Bereich I für den dritten Gang des Grenzwertspeichers 24 liegt. Aus Figur 4 ist ferner erkennbar, daß bei einem weiteren Hochschalten auf den vierten Gang (gestrichelt angedeutet) die Motordrehzahl n soweit abfällt, daß die zuvor benötigte Antriebsleistung von 30 KW dann vom Motor 11 nicht mehr zur Verfügung gestellt werden kann.

Die Erfindung ist nicht auf das Ausführungsbeispiel beschränkt, da sich das Verfahren zur Ermittlung des verbrauchsoptimalen Getriebeganges durch ergänzende Programmschritte noch weiter ausgestalten läßt. Wesentlich sind jedoch folgende Verfahrensschritte : Während einer Fahrstrecke wird die Abtriebsdrehzahl n₁ des Getriebes 12 oder eine entsprechende Größe wie beispielsweise dei Drehzahl eines Antriebsrades gemeinsam mit der Motordrehzahl n gemessen und daraus der 99 fs jeweils eingelegte Getriebegang ermittelt wird. Außerdem werden die gemessenen Werte für die Motordrehzahl n, und für die Abtriebsdrehzahl n₁ und der Wert φ der Gaspedalstellung laufend kurzzeitig gespeichert. Nach jedem vollendeten Hochschalten des Getriebes 12 wird die neue normierte Leistung Pn₂ mit der vor dem Hochschalten ermittelten normierten Leistung Pn₁ verglichen und bei gleicher oder größerer neuer normierter Leistung Pn₂ werden die vor dem Hochschalten gemessen und gespeicherten Werte der Motordrehzahl n und der Gaspedalstellung φ in einem dem verlassenen Getriebegang zugeordneten Bereich eines Grenzwertspeichers eingegeben.

Auf diese Weise werden während der Fahrt durch mehrfaches Hochschalten des Getriebes 12 in den verschiedenen Getriebegängen bei unterschiedlichen Motordrehzahlen n und unterschiedlichen Gaspedalstellungen φ in den für die einzelnen Getriebegänge aufgegliederten Grenzwertspeicher 24 zahlreiche Grenzwerte A1, A2 ... abgelegt, die den verbrauchsgünstigen von verbrauchsungünstigen Betriebsbereich des Motors 11 trennen. Mit Ausnahme des Rückwärtsganges und des höchsten Getriebeganges werden für jeden Getriebegang in den Grenzwertspeicher 24 die ermittelten Grenzwerte in einer nach Motordrehzahl n und Gaspedalstellung φ in beliebig feiner Abstufung aufgegliederten Speichermatrix 24a abgelegt. Vor der ersten Fahrt und zu Beginn der Lernphase der Schaltanzeige kann von drei verschiedenen Grundzuständen der Speichermatrizen ausgegangen werden. Im einen Fall sind alle Speicherplätze gelöscht, d. h. mit « 0 » besetzt. Der Mikrocomputer setzt nach jedem erfolgreichen Schaltvorgang spezielle Bereiche der Matrix auf « 1 » und baut so sukzessive den Bereich II von Figur 3 auf. Im zweiten Fall sind zunächst alle Speicherplätze gesetzt. Nach jedem erfolgreichen Schaltvorgang wird der Bereich II durch Löschen spezieller Matrix-Bereiche verkleinert. Ebensogut können aber in Abwandlung des Ausführungsbeispieles vor Fahrtbeginn z. B. vom Hersteller verschiedene Grundwerte als vorläufige grobe Kennlinie in den Grenzwertspeicher 24 eingegeben werden, die bereits während der ersten Fahrt für eine Hochschaltanzeige verwendet werden können und die dann während der Fahrt durch genauere Grenzwerte überschrieben werden, indem weitere Speicherplätze der Speichermatrix 24a durch das Programm des Mikrocomputers 19 mit einer 1 belegt werden. Durch weitere Programmschritte lassen sich auch einzelne im Grenzwertspeicher abgelegte Grenzwerte wieder löschen, wenn bei späteren Fahrten die normierte Leistung Pn₂ nach dem Hochschalten des Getriebes 12 bei diesen Grenzwerten zum wiederholten Male die normierte Leisung Pn₁ vor dem Hochschalten nicht mehr erreicht. Auf diese Weise ist es möglich, die Grenzwertlinie a (Figur 3) durch das Fahrverhalten des Fahrers zu korrigieren. Dies ist beispielsweise dann erforderlich, wenn ein anderer Fahrer nicht mehr zo zügig hochschaltet und weiter beschleunigt wie sein Vorgänger. Die Fahrgeschwindigkeit könnte dadurch bereits soweit zurückgehen, daß der Motor 11 dann nicht mehr die erforderliche Antriebsleistung entwickeln kann und folglich wieder zurückgeschaltet werden muß. Eine Hochschaltanzeige soll aber nur dann erfolgen, wenn die Antriebsleistung im nächst höheren Gang in jedem Fall noch eine Beschleunigung des Fahrzeugs zuläßt. Zu diesem Zweck werden jeweils die augenblicklichen Werte für die Motordrehzahl n und die Gaspedalstellung $\varphi$ mit den im Grenzwertspeicher 24 für den jeweils eingelegten Getriebegang gespeicherten Grenzwerten verglichen und ein Hochschaltsignal wird nur dann ausgelöst, wenn die augenblicklichen Werte n und $\varphi$ die Grenzwerte zum verbrauchsungünstigen Betriebsbereich II hin überschreiten.

Unter der Voraussetzung, daß die beiden Drehzahlen $n_{1b}$ und $n_{1c}$ sich nur unwesentlich unterscheiden, genügt zur Ermittlung einer normierten Leistung die Berechnung der Differenz der Drehzahlen $(n_{1a} - n_{1b})$ bzw. $(n_{1c} - n_{1d})$.

Auch die Schaltung zur Durchführung des Verfahrens ist nicht auf das Ausführungsbeispiel beschränkt. So kann anstelle der Gaspedalstellung auch die Stellung der Drosselklappe oder bei einem Einspritzmotor die Stellung der Regelstange einer Einspritzpumpe zur Ermittlung des Arbeitspunktes der Maschine erfaßt werden. Anstelle des Drehzahlgebers 22 an der Abtriebswelle des Getriebes 12 kann auch ein Drehzahlgeber für ein Blockierschutzsystem an einem oder an mehreren Antriebsrädern mit verwendet werden. Auch ein im Kraftfahrzeug vorhandener Tachogeber läßt sich hierbei verwenden. Für die Motordrehzahl n kann anstelle des Gebers 21 auch ein Totpunktgeber, Zündmarkengeber oder der Hochspannungsimpuls beim Zündvorgang herangezogen werden, so daß bei dem Nachrüsten eines Fahrzeuges mit der erfindungsgemäßen Schaltung gegebenenfalls die vorhandenen Gebereinrichtungen mit entsprechenden Adaptern bereits zur Ermittlung der benötigten Betriebsdaten verwendet werden können. Der Kurzzeitspeicher 23 kann eine softwaremäßig erzeugter Transientenspeicher, z. B. ein Schieberegister mit ausreichender Speicherkapazität sein, er kann aber auch gemeinsam mit dem Zwischenspeicher als RAM ausgeführt sein, indem die eingespeicherten Daten zyklisch wieder überschrieben werden. Der Beginn eines Schaltvorganges am Getriebe 12 läßt sich vom Mikrocomputer 19 dadurch feststellen, daß die Motordrehzahl sich dann bei fast gleichbleibender Fahrzeuggeschwindigkeit rasch vermindert oder erhöht. Es ist aber auch möglich, durch einen Kupplungsschalter an der Getriebekupplung den Beginn und das Ende eines Schaltvorganges zu erfassen und dies über einen weiteren Eingang dem Mikrocomputer 19 zuzuführen.

Der wesentliche Vorteil des erfindungsgemäßen Verfahrens gegenüber dem bekannten Verfahren zur Ermittlung des verbrauchsoptimalen Getriebeganges eines Kraftfahrzeugantriebes besteht darin, daß unabhängig vom Beladungszustand, von Fahrbahnsteigungen, vom Luft- und Reibungswiderstand sowie unabhängig von der Getriebestufung und von der Leistungsstärke der Brennkraftmaschine des Fahrzeuges die Grenzwerte für jeden Getriebegang getrennt ermittelt werden. Das System ist lernfähig, da mit jedem Hochschalten des Getriebes bei mindestens gleicher Leistung nach dem Hochschaltvorgang sukzessiv immer mehr Grenzwerte in den Grenzwertspeicher 24 eingegeben werden, so daß mit zunehmender Fahrdauer schrittweise eine fein gestufte bzw. kontinuierliche Grenzwertlinie a für ein Hochschalten ohne Verringerung der Antriebsleistung gebildet wird. Mit der Zahl der erfolgreichen Hochschaltvorgänge steigt somit auch die Empfindlichkeit und die Genauigkeit der Hochschaltanzeige und sie paßt sich auch später einem anderen Fahrverhalten oder einer Leistungsveränderung z. B. durch verbrauchte Zündkerzen, Verstellung am Vergaser oder an der Einspritzpumpe sowie bei Verstellung des Zündzeitpunktes an.

Anstelle einer optischen und/oder akustischen Hochschaltanzeige ist es aber auch im Rahmen der Erfindung möglich, das von der Schalteinrichtung abgegebene Hochschaltsignal zur Umschaltung eines automatischen Getriebes zu verwenden. Ein Zurückschalten des Getriebes läßt sich dabei ebenfalls realisieren, wobei ein Rückschaltsignal durch die Schalteinrichtung immer dann erzeugt wird, wenn bei nahezu durchgetretenem Gaspedal und einer Motordrehzahl kleiner als 1 500 min$^{-1}$ eine negative Beschleunigung ermittelt wird. Außerdem können in diesem Fall auch die Programmschritte 32 bis 34 des Mikrocomputerprogramms zur Ermittlung des eingelegten Getriebeganges gemäß Figur 2 entfallen, wenn bei automatischen Getriebeschaltungen die einzelnen Gänge durch entsprechend zugeordnete Schalter erfaßt werden.

## Patentansprüche

1. Verfahren zur Ermittlung des verbrauchsoptimalen Getriebeganges eines Kraftfahrzeugantriebes, dessen Antriebsmotor (11) über ein gestuftes Getriebe (12) mit den Antriebsrädern (14) des Kraftfahrzeugs (10) gekuppelt ist, mit je einem die Stellung ($\varphi$) eines Gaspedals oder einer Drosselklappe und dergl. die Drehzahl (n) des Antriebsmotors sowie die Ausgangsdrehzahl des Getriebes abfühlenden Geber (18, 21, 22), mit einem Datenspeicher (24) und mit einem Rechner (19), der die von den Gebern gemessenen Betriebsdaten (n, $\varphi$) des Fahrzeugs verarbeitet und ein Umschaltsignal abgibt, wenn der Antriebsmotor in einem anderen Gang des Getriebes mit einem geringeren Kraftstoffverbrauch zu arbeiten vermag, dadurch gekennzeichnet,

a) daß während der Fahrt die Antriebsdrehzahl ($n_1$) des Fahrzeugs (10), die Motordrehzahl (n) und die Gaspedal- oder Drosselklappenstellung ($\varphi$) und dergl. zyklisch gemessen sowie der jeweils eingelegte Getriebegang (g) ermittelt wird,

b) daß die gemessenen Werte der Antriebsdrehzahl ($n_1$) des Fahrzeugs (10) und die Motordrehzahl (n) sowie die Gaspedal- oder Drosselklappenstellung ($\varphi$) und dergl. laufend kurzzeitig gespeichert werden,

c) daß bei eingelegtem Getriebegang ein aus der Änderung der kurzzeitig nacheinander gemes-

senen Antriebsdrehzahlen (n₁) ermittelter Wert zwischengespeichert wird, der eine normierte Leistung (Pn) darstellt,

d) daß nach jedem vollendeten Hochschalten des Getriebes (12) die neue normierte Leistung (Pn₂) mit der vor derm Hochschalten ermittelten normierten Leistung (Pn₁) verglichen wird,

e) daß bei gleicher oder größerer neuer normierter Leistung (Pn₂) in einem dem verlassenen Getriebegang (g) zugeordneten Speicherbereich (24a) eines Grenzwertspeichers (24) eine Grenzwertmarke (A1, A2) an dem Platz des Speicherbereichs (24a) eingegeben wird, welcher durch die vor dem Hochschalten gemessenen, kurzzeitig gespeicherten Werte der Motordrehzahl (n) und der Gaspedal- oder Drosselklappenstellung (φ) und dergl. vorgegeben wird so daß dadurch sukzessive in dem Speicherbereich (24a) eine Kennlinie (a) aufgebaut wird, welche für den verlassenen Getriebegang (a) den verbrauchsgünstigen Betriebsbereich (I) des Motors vom verbrauchsungünstigen Bereich (II) trennt und

f) daß aus den zyklisch gemessenen Werten der Motordrehzahl (n) und der Gaspedal- oder Drosselklappenstellung (φ) und dergl: der augenblickliche Arbeitspunkt (A) ermittelt und durch diesen beim Überschreiten der Kennlinie (a) im Speicherbereich (24a) des eingelegten Getriebeganges (g) zum verbrauchsungünstigeren Betriebsbereich (II) hin ein Hochschaltsignal ausgelöst wird.

2. Verfahren nach Anspruch 1, dadurch gekennzeichnet, daß die normierte Leistung (Pn) aus der Differenz der kurzzeitig nacheinander gemessenen und quadrierten Antriebsdrehzahlwerte ($n_{1a}^2 - n_{1b}^2$) gebildet wird.

3. Verfahren nach Anspruch 1, dadurch gekennzeichnet, daß während einer Fahrstrecke durch mehrfaches Hochschalten des Getriebes (12) in den verschiedenen Getriebegängen (g) bei unterschiedlichen Motordrehzahlen (n) und unterschiedlichen Gaspedal- oder Drosselklappenstellungen (φ) mit dem jeweiligen Speicherbereich (24a) des für die einzelnen Getriebegänge (g) aufgegliederten Grenzwertspeichers (24) mehrere Grenzwerte (A1, A2) abgelegt werden, die den verbrauchsgünstigen Bereich (I) vom verbrauchsungünstigen Bereich (II) des Motors (11) trennen.

4. Verfahren nach Anspruch 3, dadurch gekennzeichnet, daß für jeden Getriebegang (g) in einer ihm zugeordneten, den Speicherbereich (24a) bildenden Speichermatrix des Grenzwertspeichers (24) die ermittelten Grenzwerte (A1, A2) in bestimmte, nach Motordrehzahl (n) und Gaspedal- oder Drosselklappenstellung (φ) in Stufen aufgegliederte Speicherplätze in Binärform angelegt werden.

5. Verfahren nach Anspruch 4, dadurch gekennzeichnet, daß vor Beginn der ersten Fahrt alle Speichermatrixen (24a) gelöscht bzw. gesetzt und folglich mit « 0 » bzw. « 1 » belegt werden.

6. Verfahren nach Anspruch 4, dadurch gekennzeichnet, daß vor Beginn der ersten Fahrt einige Grundwerte als grobe Kennlinie durch Löschen von Speicherplätzen im verbrauchsgünstigen Betriebsbereich (I) und Setzen von Speicherplätzen im verbrauchsungünstigen Bereich (II) vorgegeben werden.

7. Verfahren nach Anspruch 1, dadurch gekennzeichnet, daß einzelne im Grenzwertspeicher (24) abgelegte Grenzwerte (A1, A2) wieder gelöscht werden, wenn bei diesen Grenzwerten zum wiederholten Male bei späteren Fahrten die normierte Leistung (Pn₂) nach dem Hochschalten des Getriebes (12) die vor dem Hochschalten ermittelte normierte Leistung (Pn₁) nicht mehr erreicht.

8. Schaltungsvorrichtung mit einem Weggeber (18) zur Messung des Gaspedal- oder Drosselklappenstellung (φ) und dergl., einen Drehzahlgeber (21) zur Messung der Motordrehzahl (n) sowie einen weiteren Drehzahlgeber (22) zur Messung der Antriebsdrehzahl (n₁) des Fahrzeugs (10) und mit einer Auswerteschalteinrichtung (20) zur Durchführung des Verfahrens nach Anspruch 1, dadurch gekennzeichnet, daß die Auswerteschalteinrichtung (20) einen Kurzzeitspeicher (23) für die zyklisch gemessenen Betriebsdaten (n, φ) und einen für die Getriebegänge (g) des Getriebes (12) unterteilten überschreibbaren Grenzwertspeicher (24) zur Aufnahme von solchen Grenzwerten (A1, A2) aufweist, die durch Motordrehzahlen (n) und Gaspedal- oder Drosseklappenstellungen (φ) und dergl. vor dem Hochschalten des Getriebes (12) bestimmt werden, wenn nach dem Hochschalten die normierte Leistung (Pn₂) gleich groß oder größer ist als die normierte Leistung (Pn₁) vor . dem Hochschalten und daß Mittel (19) vorgesehen sind, mit denen die Grenzwerte (A1, A2) ein Hochschaltsignal auslösen sobald der aus den augenblicklichen Werten (n, φ) ermittelte Arbeitspunkt (A, A') des Motors (11) diese Grenzwerte (A1, A2) überschreitet.

9. Schaltungsvorrichtung nach Anspruch 8, dadurch gekennzeichnet, daß die Auswerteschalteinrichtung (20) einen Mikrocomputer (19) enthält und der Grenzwertspeicher (24) jeweils einem Getriebegang (g) zugeordnete Speichermatrixen (24a) enthält, deren im verbrauchsungünstigen Betriebsbereich (II) liegenden Speicherplätze einen anderen binären Inhalt haben als die dem verbrauchsgünstigen Bereich (I) zugeordneten Speicherplätze.

10. Schaltungsvorrichtung nach einem der Ansprüche 8 und 9, dadurch gekennzeichnet, daß der Ausgang der Auswerteschalteinrichtung (20) eine Hochschaltanzeige oder ein automatisches Getriebe steuert.

**Claims**

1. Process for determining the consumption-optimum gear for an engine of a motor vehicle, the drive engine (11) of which is coupled via a staged gear-box (12) to the drive wheels (14) of the motor vehicle (10), with one sensor each (18, 21, 22) sensing the position (φ) of a gas pedal or of a throttle valve and the like, the rotational speed (n) of the drive engine and the initial rotational speed of the gear-box, with a data memory (24) and with a computer (19), which processes the preformance data (n, φ) of the vehicle measured by the sensors and emits a change-over signal when the drive engine can operate with a lower fuel consumption in a different gear of the gear-box, characterized in that

a) during the journey, the drive rotational speed ($n_1$) of the vehicle (10) and the engine rotational speed (n) as well as the gas pedal or throttle valve position (φ) and the like are cyclically measured and the gear (9) selected in each ease is determined,

b) the measured values of the drive rotational speed ($n_1$) of the vehicle (10) and the engine rotational speed (n) as well as the gas pedal or throttle valve position (φ) and the like are briefly stored continuously,

c) with a selected gear, a value determined from the variation of the briefly successively measured drive rotational speeds ($n_1$) is buffer-stored, which value represents a normalized power (Pn),

d) after each completed shifting-up of the gear-box (12), the new normalized power ($Pn_2$) is compared with the normalized power ($Pn_1$) determined before shifting-up,

e) in the event of equal or greater new normalized power ($Pn_2$), a limit value mark (A1, A2) is entered in a memory area (24a) of a limit value memory (24) assigned to the gear just left (g) at the place in the memory area (24a) which is given by the briefly stored values of the engine rotational speed (n) and of the gas pedal or throttle valve position (φ) and the like, measured before shifting-up, so that a characteristic (a) is thereby built up successively in the memory area (24a), which characteristic separates the consumption-favourable operating range (I) of the engine from the consumption-unfavourable range (II) for the gear just left (g), and

f) the instantaneous operating point (A) is determined from the cyclically measured values of the engine rotational speed (n) and of the gas pedal or throttle valve position (φ) and the like and a shift-up signal is triggered by said operating point whenever the characteristic (a) in the memory area (24a) of the gear selected (g) is exceeded toward the consumption-unfavourable operating range (II).

2. Process according to claim 1, characterized in that the normalized power (Pn) is formed from the difference between the briefly successively measured and squared drive rotational speed values ($n_{1a}^2 - n_{1b}^2$).

3. Process according to claim 1, characterized in that, during a journey, repeated shifting-up of the gear-box (12) in the various gears (g) at different engine rotational speeds (n) and different gas pedal or throttle valve positions (φ) has the effect of storing a plurality of limit values (A1, A2) with the respective memory area (24a) of the limit value memory (24a) divided up for the individual gears (g), which limit values separate the consumption-favourable range (I) from the consumption-unfavourable range (II) of the engine (11).

4. Process according to claim 3, characterized in that the limit values determined (A1, A2) are set up in binary form for each gear (g) in a storage matrix, assigned to it and forming the memory area (24a), of the limit value memory (24) in certain memory locations divided up into stages according to engine rotational speed (n) and gas pedal or throttle valve position (φ).

5. Process according to claim 4, characterized in that, before commencement of the first journey, all storage matrices (24a) are cleared or set and consequently assigned the values « 0 » or « 1 ».

6. Process according to claim 4, characterized in that, before commencement of the first journey, a number of basic values are preset as rough characteristic by the clearing of memory locations in the consumption-favourable operating range (I) and the setting of memory locations in the consumption-unfavourable range (II).

7. Process according to claim 1, characterized in that individual limit values (A1, A2) stored in the limit value memory (24) are cleared again if, in the case of these limit values, during subsequent journeys the normalized power ($Pn_2$), on a repeated occasion, after shifting-up of the gear-box (12) no longer reaches the normalized power ($Pn_1$) determined before shifting-up.

8. Circuit arrangement with a displacement sensor (18) for measurement of the gas pedal or throttle valve position (φ) and the like, a rotational speed sensor (21) for measurement of the engine rotational speed (n) and a further rotational speed sensor (22) for measurement of the drive rotational speed ($n_1$) of the vehicle (10) and with an evaluation switching device (20) for implementation of the process according to claim 1, characterized in that the evaluation switching device (20) has a short-time memory (23) for the cyclically measured performance data (n, φ) and a subdivided, overwriteable limit value memory (24) for the gears (g) of the gear-box (12), for receiving such limit values (A1, A2) which are determined by engine rotational speeds (n) and gas pedal or throttle valve positions (φ) and the like before shifting-up of the gear-box (12) if, after shifting-up, the normalized power ($Pn_2$) is equal to or greater than the normalized power ($Pn_1$) before shifting-up, and in that means (19) are provided by which the limit values (A1, A2) trigger a shift-up signal as soon as the operating point (A, A') of the engine (11) determined from the instantaneous values (n, φ) exceeds these limit values (A1, A2).

9. Circuit arrangement according to claim 8, characterized in that the evaluation switching device (20) includes a microcomputer (19) and the limit value memory (24) in each case includes storage matrices (24a) assigned to a gear (g), the memory locations of which matrices lying in the consumption-unfavourable operating range (II) have a different binary content than the memory locations assigned to the consumption-favourable range (I).

10. Circuit arrangement according to one of claims 8 and 9, characterized in that the output of the evaluation switching device (20) controls a shift-up display or an automatic gear-box.

**Revendications**

1. Procédé pour déterminer le rapport de vitesses optimum sur le plan de la consommation d'une transmission de véhicule dont le moteur (11) est relié par une boîte de vitesses à rapports (12) aux roues motrices (14) du véhicule à moteur (10), comportant des capteurs (18, 21, 22) détectant respectivement la position ($\varphi$) de la pédale d'accélération ou du papillon ou analogue, la vitesse de rotation (n) du moteur ainsi que la vitesse de rotation de sortie de la boîte de vitesses, d'une mémoire de données (24) et d'un calculateur (19) traitant les données de fonctionnement (n, $\varphi$) du véhicule, mesurées par les capteurs et émet un signal de commutation si le moteur est susceptible de fonctionner avec une consommation de carburant plus réduite dans un autre rapport de la boîte de vitesses, procédé caractérisé en ce que :

a) pendant le déplacement, on mesure de manière cyclique la vitesse de rotation d'entraînement ($n_1$) du véhicule (10), la vitesse de rotation (n) du moteur et la position ($\varphi$) de la pédale d'accélération ou du papillon ou analogue, et on détermine le rapport de vitesses (g) utilisé,

b) on inscrit en mémoire en continu, pendant une courte durée les grandeurs mesurées de la vitesse de rotation d'entraînement ($n_1$) du véhicule (10) et la vitesse de rotation (n) du moteur ainsi que la position ($\varphi$) de la pédale d'accélération ou du papillon ou analogue,

c) et en ce que pour le rapport de vitesses utilisé, on inscrit en mémoire de manière intermédiaire la grandeur déterminée à partir de la variation des vitesses de rotation d'entraînement ($n_1$) mesurées successivement à courts intervalles et représentant la puissance normalisée (Pn),

d) et après l'exécution de chaque passage du rapport supérieur de la boîte de vitesses (12), on compare la nouvelle puissance normalisée ($Pn_2$) à la puissance normalisée ($Pn_1$) déterminée avant le passage de ce rapport supérieur,

e) en ce que pour une puissance normalisée ($Pn_2$), nouvelle égale ou supérieure à la précédente, on introduit dans la zone de mémoire (24a) associée au rapport de vitesses (g) que l'on vient de quitter dans une mémoire de valeurs limites (24) un repère de valeurs limites (A1, A2) à l'emplacement de la zone de mémoire (24a), repère qui est prédéterminé par les grandeurs mesurées avant le passage du rapport supérieur et inscrites pendant une courte durée et correspondant à la vitesse de rotation (n) du moteur et à la position ($\varphi$) de la pédale d'accélération ou du papillon ou analogue, pour construire ainsi une courbe caractéristique (a) successivement dans la zone de mémoire (24a), courbe qui sépare pour le rapport de vitesses (a) que l'on vient de quitter, la zone de fonctionnement (I) du moteur, favorable sur le plan de la consommation de la zone de fonctionnement (II) défavorable sur le plan de la consommation et,

f) à partir des grandeurs mesurées de manière cyclique de la vitesse de rotation (n) du moteur et de la position ($\varphi$) de la pédale d'accélération ou du papillon ou analogue, on détermine le point de fonctionnement instantané (A) et par celui-ci on déclenche un signal de passage du rapport supérieur lors du dépassement vers le haut de la courbe caractéristique (a) dans la zone de mémoire (24a) pour le rapport de vitesses (g) utilisé, vers la zone de fonctionnement (II) défavorable sur le plan de la consommation.

2. Procédé selon la revendication 1, caractérisé en ce que la puissance normalisée (Pn) se forme à l'aide de la différence des vitesses de rotation d'entraînement mesurées successivement à courts intervalles et mises au carré ($n_{1a}^2 - n_{1b}^2$).

3. Procédé selon la revendication 1, caractérisé en ce que pendant un déplacement, on inscrit plusieurs grandeurs limites (A1, A2) séparant la plage (I) favorable sur le plan de la consommation de la plage (II) défavorable sur le plan de la consommation du moteur (11) dans la mémoire de valeurs limites (24) subdivisée en zones de mémoire (24a) respectivement associées aux différents rapports de vitesse (g), à l'aide du multiple passage des rapports supérieurs de la boîte de vitesses (12) pour les différents rapports (g) pour des vitesses de rotation (n) différentes du moteur et des positions ($\varphi$), différentes de la pédale d'accélération ou du papillon.

4. Procédé selon la revendication 3, caractérisé en ce que pour chaque rapport de vitesses (g), on inscrit sous forme binaire les grandeurs limites (A1, A2) ainsi déterminées dans des emplacements de mémoire subdivisés en échelons suivant la vitesse de rotation (n) du moteur et la position ($\varphi$) de la pédale d'accélération ou du papillon, dans une matrice formant la zone de mémoire (24a) de la mémoire de valeurs limites (24).

5. Procédé selon la revendication 4, caractérisé en ce qu'avant le début du premier déplacement, toutes les matrices de mémoire (24a) sont effacées ou sont mises à l'état et par suite se trouvent à l'état « 0 » ou à l'état « 1 ».

6. Procédé selon la revendication 4, caractérisé en ce qu'avant le début du premier déplacement, on introduit quelques grandeurs de base comme courbes caractéristiques grossières par effacement d'emplacements de mémoire dans la zone de fonctionnement (I) favorable sur le plan de la consommation et on met à l'état des emplacements de mémoire de la zone de fonctionnement (II) défavorable sur le plan de la consommation.

7. Procédé selon la revendication 1, caractérisé en ce qu'on efface de nouveau différentes grandeurs limites (A1, A2) inscrites dans la mémoire de valeurs limites (24) si pour ces grandeurs limites, de façon répétée au cours des autres déplacements, la puissance normalisée ($Pn_2$) n'atteint plus après le passage du rapport supérieur de la boîte (12), la puissance normalisée $(Pn_1)$ déterminée avant le passage de ce rapport supérieur.

8. Circuit comportant un capteur de course (18) pour mesurer la position $(\varphi)$ de la pédale d'accélération ou du papillon ou analogue, un capteur de vitesse de rotation (21) pour mesurer la vitesse de rotation (n) du moteur ainsi qu'un autre capteur de vitesse de rotation (22) pour mesurer la vitesse de rotation d'entraînement $(n_1)$ du véhicule (10) et un circuit d'exploitation (20) pour la mise en œuvre du procédé selon la revendication 1, caractérisé en ce que le circuit d'exploitation (20) comporte une mémoire-tampon (23) pour recevoir les données de fonctionnement (n, $\varphi$) mesurées de manière cyclique et une mémoire de valeurs limites (24) effaçables, subdivisée en fonction des rapports de vitesses (g) de la boîte de vitesses (12) pour recevoir les valeurs limites (A1, A2) qui sont déterminées à partir des vitesses de rotation (n) du moteur et des positions ($\varphi$) de la pédale d'accélération ou du papillon ou analogue avant le passage du rapport supérieur de la boîte (12) si après le passage du rapport supérieur, la puissance normalisée $(Pn_2)$ est égale ou supérieure à la puissance normalisée $(Pn_1)$ précédant le passage du rapport supérieur et en ce que des moyens (19) sont prévus pour que les grandeurs limites (A1, A2) déclenchent un signal de passage du rapport supérieur dès que le point de fonctionnement (A, A') du moteur (11), déterminé à partir des valeurs instantanées (n, $\varphi$) dépasse ces valeurs limites (A1, A2).

9. Circuit selon la revendication 8, caractérisé en ce que le circuit d'exploitation (20) comporte un micro-ordinateur (19) et la mémoire de valeurs limites (24) comporte une matrice de mémoire (24a) associée à chaque rapport de vitesses (g), et dans laquelle les emplacements de mémoire situés dans la plage de fonctionnement (II) défavorable sur le plan de la consommation ont un autre état binaire que les emplacements de mémoire associés à la plage de fonctionnement (I) avantageuse sur le plan de la consommation.

10. Circuit selon l'une quelconque des revendications 8 et 9, caractérisé en ce que la sortie du circuit d'exploitation (20) commande un moyen d'affichage du passage du rapport supérieur et une boîte de vitesses automatique.

FIG.1

FIG.3

FIG.4

FIG.2

Start — 49

Zündung ein — 30
nein

III

$n, n_1 > 0$ — 31
nein

$n / n_1$ — 32

speichern — 33

ordnen — 34

$n, n_1, \varphi, g$ speichern — 35

Schalt-vorgang — 36
nein II

ja

$n, n_1, \varphi, g$ Zwischenspeicher — 37

$Pn_1 = n_{1a}^2 - n_{1b}^2$ — 38

Schalt-vorgang Ende — 39
nein

ja

$g + 1$ — 40
nein II

ja

$n, n_1, \varphi, g$ speichern — 41

$Pn_2 = n_{1c}^2 - n_{1d}^2$ — 42

I

I

$Pn_2 \geq Pn_1$ — 43
nein

ja

Grenzwert $A_x(n, \varphi)$ abspeichern — 44

II

$A(n, \varphi, g)$ ermitteln — 45

A im II-Bereich — 46
nein

ja

Ausgabe "Hoch-schalten" — 47

Zündung aus — 48
nein III

ja

Ende — 50

2